(19) **Europäisches Patentamt / European Patent Office / Office européen des brevets**

(11) **EP 4 692 151 A1**

(12) **EUROPEAN PATENT APPLICATION**
published in accordance with Art. 153(4) EPC

(43) Date of publication:
**11.02.2026 Bulletin 2026/07**

(21) Application number: **24780269.7**

(22) Date of filing: **26.03.2024**

(51) International Patent Classification (IPC):
*C08G 18/66* (2006.01)    *C08G 18/10* (2006.01)
*C08G 18/32* (2006.01)    *C08G 18/42* (2006.01)
*C08G 18/48* (2006.01)    *C08G 18/76* (2006.01)

(52) Cooperative Patent Classification (CPC):
**C08G 18/10; C08G 18/32; C08G 18/42;**
**C08G 18/48; C08G 18/66; C08G 18/76**

(86) International application number:
**PCT/JP2024/011876**

(87) International publication number:
**WO 2024/204156 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054228**

(71) Applicant: **Daicel Corporation**
**Osaka-shi, Osaka 530-0011 (JP)**

(72) Inventors:
• **KAMADA, Takeru**
**Tokyo 108-8230 (JP)**
• **TAKAOKA, Shinnosuke**
**Tokyo 108-8230 (JP)**

(74) Representative: **Grünecker Patent- und Rechtsanwälte PartG mbB Leopoldstraße 4 80802 München (DE)**

(54) **POLYURETHANE RESIN COMPOSITION**

(57)    An object of the present invention is to provide a polyurethane resin composition capable of forming a polyurethane-based resin having mechanical properties, hydrolysis resistance, and low-temperature flexibility in combination. The polyurethane resin composition of the present disclosure includes a urethane prepolymer having a diol compound as a constitutional unit and an aromatic diisocyanate as a constitutional unit, and a chain extender, in which the diol compound includes an A-B-A block copolymer, the block copolymer includes a polylactone chain as an A block component and a polytrimethylene ether glycol chain as a B block component, and a content of the A block component to the total amount of the A-B-A block copolymer is from 33 to 67 mass%.

EP 4 692 151 A1

## Description

Technical Field

The present disclosure relates to a polyurethane resin composition. The present application claims priority to JP 2023-054228 filed in Japan on March 29, 2023, the content of which is incorporated herein by reference.

Background Art

Polyurethanes are typical block copolymers consisting of blocks of soft segments and hard segments. The soft segments are formed primarily from polyols, and the hard segments are formed primarily from diisocyanates and chain extenders (the hydroxyl at the end of the polyol is thought to form a part of the hard segment).

In particular, in known inventions, it is known that polyether polyols such as polypropylene glycol, polytetramethylene ether glycol, and polytrimethylene ether glycol are used as the polyol used for the polyurethane (for example, Patent Document 1).

In addition, it is also known to use a compound having a polyester structure, as the polyols, in order to improve the mechanical properties such as tensile stress and abrasion resistance (for example, Non-Patent Literature 1).

Citation List

Patent Document

Patent Document 1: JP 2005-535733 A

Non-Patent Literature

Non-Patent Literature 1: Mitsuo Akiba, "Deterioration and stabilization of Polyurethanes", Journal of The Adhesion Society of Japan, Vol. 40, No. 6, 2004, 241 to 252

Summary of Invention

Technical Problem

However, the polyurethane resin composition using the polyol described in Patent Document 1 has insufficient mechanical properties such as tensile stress and abrasion resistance. In addition, the polyol described in Patent Document 1 precipitates at a low temperature, causing the flexibility of the resin to be impaired.

Further, when the structure of the polyester described in Non-Patent Literature 1 is included, the inclusion has caused a problem with hydrolysis resistance, although the mechanical properties are improved.

Accordingly, an object of the present disclosure is to provide a polyurethane resin composition capable of forming a polyurethane-based resin having mechanical properties, hydrolysis resistance, and low-temperature flexibility in combination.

Solution to Problem

As a result of intensive studies to solve the above problems, the present inventors have found that a polyurethane resin composition including a urethane prepolymer having a diol compound as a constitutional unit and an aromatic diisocyanate as a constitutional unit, and a chain extender, wherein the diol compound contains an A-B-A block copolymer, the A-B-A block copolymer contains a polylactone chain as an A block component and a polytrimethylene ether glycol chain as a B block component, and a content of the A block component relative to a total amount of the A-B-A block copolymer is a specific ratio has mechanical properties, hydrolysis resistance, and low-temperature flexibility in combination. The present disclosure relates to what has been completed based on these findings.

Specifically, the present disclosure provides the polyurethane resin composition including the urethane prepolymer having the diol compound as the constitutional unit and the aromatic diisocyanate as the constitutional unit, and the chain extender, wherein the diol compound contains the A-B-A block copolymer, the A-B-A block copolymer contains the polylactone chain as the A block component and the polytrimethylene ether glycol chain as the B block component, and the content of the A block component to the total amount of the A-B-A block copolymer is from 33 to 67 mass%.

When the polyurethane resin composition contains the urethane prepolymer having the diol compound as the constitutional unit and the aromatic diisocyanate as the constitutional unit, and the chain extender, wherein the diol compound contains the A-B-A block copolymer, the A-B-A block copolymer contains the polylactone chain as the A block component and the polytrimethylene ether glycol chain as the B block component, and the content of the A block component to the total amount of the A-B-A block copolymer is from 33 to 67 mass%, and thus, the polyurethane resin composition can have sufficient mechanical properties such as abrasion resistance and tensile stress, while exhibiting low-temperature flexibility and hydrolysis resistance.

The A-B-A block copolymer preferably has a number-average molecular weight of 4000 or less.

The polylactone chain is preferably a polycaprolactone chain. The polycaprolactone chain facilitates enhancement of the mechanical properties.

The aromatic diisocyanate is preferably diphenylmethane diisocyanate.

The chain extender is preferably 1,4-butanediol.

The present disclosure also provides a polyurethane-based resin obtained by polymerizing the urethane prepolymer and the chain extender in the polyurethane resin composition.

Advantageous Effects of Invention

The polyurethane resin composition of the present disclosure can form the polyurethane-based resin having mechanical properties such as tensile stress and abrasion resistance, hydrolysis resistance, and low-temperature flexibility in combination.

Description of Embodiments

[Polyurethane Resin Composition]

A polyurethane resin composition according to an embodiment of the present disclosure includes a urethane prepolymer having a diol compound as a constitutional unit and an aromatic diisocyanate as a constitutional unit, and a chain extender, in which the diol compound contains an A-B-A block copolymer, the A-B-A block copolymer contains a polylactone chain as an A block component and a polytrimethylene ether glycol chain as a B block component, and a content of the A block component relative to a total amount of the A-B-A block copolymer is from 33 to 67 mass%.

When the diol compound contains the A-B-A block copolymer, the A-B-A block copolymer contains the polylactone chain as the A block component and the polytrimethylene ether glycol chain as the B block component, and the content of the A block component to the total amount of the A-B-A block copolymer is from 33 to 67 mass%, amounts of an ether structure and an ester structure in the diol compound are appropriate, and thus, the polyurethane resin composition containing the diol compound can have hydrolysis resistance and low-temperature flexibility while having mechanical properties. Note that the "mechanical properties" in the present disclosure collectively refer to physical properties such as abrasion resistance and tensile stress.

<Urethane Prepolymer>

The urethane resin composition contains the urethane prepolymer having the diol compound as the constitutional unit and the aromatic diisocyanate as the constitutional unit. In other words, the urethane prepolymer contains a prepolymer obtained by reacting a polyol including the diol compound with an isocyanate including the aromatic diisocyanate, and optionally an additional component.

The urethane prepolymer has a k value (that is, a molar ratio [polyisocyanate/polyol] of the polyisocyanate to the polyol, wherein the polyisocyanate and the polyol constitute the urethane prepolymer) of preferably 2.00 or more and less than 5.00, more preferably 3.00 or more and 4.80 or less, and still more preferably 3.50 or more and 4.50 or less. When the k value is less than 5.00, the polyurethane resin composition having high flexibility and fatigue resistance is obtained. In addition, when the k value is 2.00 or more, sufficient strength is easily obtained.

(Diol Compound)

The diol compound contained in the polyol contains an A-B-A block copolymer, and the A-B-A block copolymer contains a polylactone chain as an A block component and a polytrimethylene ether glycol chain as a B block component. Although polylactone chains having different structures from each other may be used as the respective the A block components in the A-B-A block copolymer, it is preferable to use the polylactone chains that are identical, in that the respective physical properties defined in the present disclosure are obtained.

Examples of a lactone that forms the polylactone chain include 3- to 16-membered lactone compounds such as $\alpha$-acetolactone, $\beta$-propiolactone, $\gamma$-butyrolactone, $\delta$-valerolactone, $\epsilon$-caprolactone, 8-hydroxyoctanoic acid lactone, 12-hydroxydodecanoic acid lactone, 13-hydroxytridecanoic acid lactone, 14-hydroxytetradecanoic acid lactone, and 15-hydroxypentadecanoic acid lactone, and dioxanes such as 3-ethyl-2-keto-1,4-dioxane, 1,4-dioxane-2-one, and 3-propyl-2-keto-1,4-dioxane.

The lactone may have a substituent, such as an alkyl group or an alkoxy group.

Examples of the alkyl group include linear or branched alkyl groups having from about 1 to 10 carbons, such as a methyl group, an ethyl group, a propyl group, an isopropyl group, a butyl group, an isobutyl group, a s-butyl group, t-butyl group, a pentyl group, a hexyl group, a heptyl group, an octyl group, and a decyl group.

Examples of the alkoxy group include lower alkoxy groups having from about 1 to 10 carbons (preferably from 1 to 6 carbons, and more preferably from 1 to 4 carbons), such as a methoxy group, an ethoxy group, a propoxy group, an isopropoxy group, a butoxy group, an isobutoxy group, a t-butoxy group, a pentyloxy group, and a hexyloxy group.

In the present disclosure, the polylactone chain can be formed by one of the lactones alone, or by combining two or more of the lactones. Among these, the polylactone chain is preferably a polycaprolactone chain formed from $\varepsilon$-caprolactones, since it is easy to increase the mechanical properties.

The number-average molecular weight (Mn) of the polylactone chain (A block component) is preferably from 250 to 1500, and more preferably from 300 to 1250. When the number-average molecular weight of the lactone falls within the above range, the amount of an ester structure in the diol compound can be appropriate.

The number-average molecular weight (Mn) of the polytrimethylene ether glycol chain (B block component) is preferably from 500 to 3000, more preferably from 600 to 2000, and still more preferably from 800 to 1500. When the number-average molecular weight of the polytrimethylene ether glycol chain falls within the above range, the amount of an ether structure in the A-B-A block copolymer can be appropriate.

The number-average molecular weight (Mn) of the A-B-A block copolymer is preferably from 1000 to 4000, and more preferably from 1500 to 3000. When the number-average molecular weight of the A-B-A block copolymer, the number-average molecular weight of the diol compound is 1000 or more, flexibility is easily exhibited, and when it is 4000 or less, sufficient strength is easily exhibited.

The content of the A block component is from 33 to 67 mass%, preferably from 40 to 65 mass%, more preferably from 45 to 60 mass%, with respect to the total amount of the A-B-A block copolymer. When the content of the A block component falls within the above range, the ratio of the ester and the ether in the A-B-A block copolymer is appropriate, and it is easy to exhibit the mechanical properties.

The diol compound may contain an additional diol compound other than the A-B-A block copolymer, but it is preferable that the diol compound does not contain the additional diol compound other than the A-B-A block copolymer, to achieve the appropriate amounts of the ether structure and the ester structure in the diol compound.

The proportion of the A-B-A block copolymer in the diol compound is preferably 60 mol% or more, more preferably 80 mol% or more, still more preferably 90 mol% or more, and particularly preferably 95 mol% or more, with respect to 100 mol% of the total amount of the diol compound.

Examples of the additional diol compound other than the A-B-A block copolymer include polyether diols other than polytrimethylene ether glycol, glycerin, ethylene glycol, propylene glycol, butanediol, pentanediol, hexanediol, octanediol, polybutadiene polyol, polyisoprene polyol, polyester polyol, and copolymers of the compound exemplified above and the lactone or the polylactone chain.

Further, the proportion of the diol compound in the polyol forming the urethane prepolymer is preferably 60 mol% or more, more preferably 80 mol% or more, still more preferably 90 mol% or more, and particularly preferably 95 mol% or more, with respect to 100 mol% of the total amount of the polyol.

The number-average molecular weight (Mn) of the diol compound is preferably from 1000 to 4000, more preferably from 1500 to 3000, and still more preferably from 1800 to 2200. When the number-average molecular weight of the diol compound is 1000 or more, the flexibility is easily exhibited, and when it is 4000 or less, the sufficient strength is easily exhibited.

The hydroxyl value of the diol compound measured in accordance with JIS K 1557 is preferably from 28 to 113 KOH mg/g. The hydroxyl value is more preferably from 37 to 113 KOH mg/g, and still more preferably from 51 to 63 KOH mg/g. By using the diol in this range, a polyurethane with high tensile strength and good abrasion resistance while having flexibility can be obtained.

The viscosity of the diol compound at 60°C measured in accordance with JIS K 1558 is preferably 330 mPa·s or less, more preferably 300 mPa·s or less, and still more preferably 280 mPa·s or less. When the viscosity falls within the above range, the crystallinity can be reduced. In addition, the lower limit is not particularly limited, and is preferably 100 mPa·s or more.

Further, the molecular weight distribution (Mw/Mn) of the diol component is preferably 2.0 or less, more preferably 1.8 or less, and still more preferably 1.5 or less. When the molecular weight distribution falls within the above range, the low viscosity and the excellent workability, as well as the stable quality when used as polyurethanes can be obtained.

(Aromatic Diisocyanate Compound)

The polyurethane resin composition contains an aromatic diisocyanate compound as a constitutional unit of the urethane prepolymer. A single type of the aromatic diisocyanate compound may be used alone, or two or more types the aromatic diisocyanate compounds may be used in combination.

Examples of the aromatic diisocyanate compound include tolylene diisocyanate (TDI), diphenylmethane diisocyanate (MDI), 4,4'-diisocyanato-3,3'-dimethylbiphenyl (tolidine diisocyanate (TODI)), 4,4'-dibenzyl diisocyanate, 1,5-naphthylene diisocyanate (NDI), xylylene diisocyanate, 1,3-phenylene diisocyanate, and 1,4-phenylene diisocyanate (PPDI). Among them, TDI, MDI, TODI, NDI, and PPDI are preferable, and MDI is more preferable. Examples of MDI include 2,2'-diphenylmethane diisocyanate, 2,4'-diphenylmethane diisocyanate, and 4,4'-diphenylmethane diisocyanate.

In addition, the urethane prepolymer may contain an additional diisocyanate compound other than the aromatic diisocyanate compound. Examples of the additional diisocyanate compound include an aliphatic diisocyanate compound and an alicyclic diisocyanate compound. A single type of the additional diisocyanate compound may be used alone, or two or more types of the additional diisocyanate compounds may be used.

Examples of the aliphatic diisocyanate compound include 1,4-tetramethylene diisocyanate, 1,5-pentamethylene diisocyanate, 1,6-hexamethylene diisocyanate, 1,7-heptamethylene diisocyanate, 1,8-octamethylene diisocyanate, 1,9-nonamethylene diisocyanate, 2,2,4-trimethylhexamethylene diisocyanate, 2,4,4-trimethylhexamethylene diisocyanate, and 1,10-decamethylene diisocyanate.

Examples of the alicyclic diisocyanate compound include 1,3-cyclohexane diisocyanate, 1,4-cyclohexane diisocyanate, 1,3-bis(isocyanatomethyl)cyclohexane, 1,4-bis(isocyanatomethyl)cyclohexane, 4,4'-dicyclohexylmethane diisocyanate, isophorone diisocyanate, and norbornene diisocyanate.

The proportion of the aromatic diisocyanate compound in the isocyanate forming the urethane prepolymer is preferably 60 mol% or more, more preferably 80 mol% or more, still more preferably 90 mol% or more, and particularly preferably 95 mol% or more, with respect to 100 mol% of the total amount of the isocyanate.

(Chain Extender)

In the polyurethane resin composition, a known or common chain extender can be used. A single type of the chain extender may be used alone, or two or more types of the chain extenders may be used.

The chain extender is not particularly limited, and examples of the chain extender include low molecular weight polyols, polyamines. The molecular weight of the chain extender is, for example, 500 or less, and preferably 300 or less.

Examples of the chain extender include diols such as ethylene glycol, diethylene glycol, propylene glycol, 1,3-propanediol, 1,3-butanediol, 1,4-butanediol, 1,5-pentanediol, 1,2-pentanediol, 2,3-pentanediol, neopentyl glycol, 1,6-hexanediol, 3-methyl-1,5-pentanediol, 1,4-cyclohexanediol, and 1,4-cyclohexanedimethanol; and diamines such as hexamethylenediamine, 3,3'-dimethyl-4,4'-diaminodicyclohexylmethane, and 4,4'-methylenebis-2-chloroaniline. Among these, diols are preferable, and 1,4-butanediol is particularly preferable.

The proportion of 1,4-butanediol in the chain extender is preferably 60 mol% or more, more preferably 80 mol% or more, still more preferably 90 mol% or more, and particularly preferably 95 mol% or more, with respect to 100 mol% of the total amount of the chain extender.

The polyurethane resin composition is preferably obtained by reacting the aromatic diisocyanate compound with the diol compound and the chain extender, in which the ratio of the number of moles of an isocyanate group of the aromatic diisocyanate compound to the number of moles of an isocyanate-reactive group (hydroxyl group, amino group, etc.) in the diol compound and the chain extender [NCO group/NCO-reactive group] falls within the range of preferably from 0.9 to 1.1, more preferably from 0.93 to 1.07, and still more preferably from 0.97 to 1.03. In other words, in the polyurethane resin composition, the ratio of the number of moles of a structural unit derived from the isocyanate group to the number of moles of a structural unit derived from the isocyanate-reactive group preferably falls within the above range.

(Additional Components)

In addition, the polyurethane resin composition may contain an additional component other than the diol compound, the aromatic diisocyanate, and the chain extender. Examples of the additional component include a conductive agent, a light stabilizer, an ultraviolet absorber, an antioxidant, a solvent, a filler, a flame retardant, a pigment, an antimicrobial agent, an antistatic agent, a processing aid, and a viscosity improver. The content of the additional compound is preferably 5 mass% or less, more preferably 3 mass% or less, still more preferably 1 mass% or less, and particularly preferably 0 mass%, with respect to 100 mass% of the total amount of the polyurethane resin composition.

[Polyurethane-based Resin]

A polyurethane-based resin can be produced by curing the polyurethane resin composition described above by a known or common method. The polyurethane-based resin is preferably a resin including the urethane prepolymer cross-linked with the chain extender.

Examples of the method for producing the polyurethane-based resin include a prepolymer method.

Examples of the prepolymer method include a method in which the A block component and the B block component contained in the diol compound are mixed, an A-B-A block copolymer is prepared by a known or common method, and then an aromatic diisocyanate compound is reacted in advance at a temperature of 120°C or less so that in the diol compound, isocyanate groups are excessive with respect to hydroxy groups, a prepolymer with an isocyanate group at the end is thus obtained, and the prepolymer is reacted with a chain extender.

The polyurethane-based resin produced by the above method preferably has a structural unit containing the urethane prepolymer and a structural unit containing the chain extender.

In the polyurethane-based resin, it is preferable that a shoulder peak is not confirmed within the range from -40°C to 40°C (preferably from -60°C to 40°C) in a DMA chart obtained by viscoelasticity measurement. In this case, the polyurethane resin composition is less likely to harden in a low-temperature region, and easily exhibits low-temperature flexibility.

The polyurethane-based resin preferably has a Type-A hardness of 85 or more and a Type-D hardness of 50 or less as measured in accordance with JIS K 7312. When the Type-A hardness is 85 or more, high strength is easily exhibited, and when the Type-D hardness is 50 or less, flexibility is easily exhibited.

The tensile stress of the polyurethane-based resin at from 400 to 500% elongation measured at a temperature of 23°C using a No. 3 dumbbell in accordance with JIS K 7312 is preferably 38 MPa or more, more preferably 40 MPa or more, and still more preferably 42 MPa or more. Note that, when the sample is ruptured within the range of the above conditions, the value at the rupture is evaluated, and when the sample is not ruptured, the value of the tensile stress at 500% elongation is evaluated. When the tensile stress is 38 MPa or more, the polyurethane-based resin composition can exhibit sufficient strength. In addition, the upper limit is not particularly limited, and is preferably 70 MPa or less.

In addition, in a Taber abrasion test performed to the polyurethane-based resin in accordance with JIS K 7312, when a test piece of the polyurethane-based resin molded into a shape with a thickness of 2 mm, a length of 12 mm, and a wide of 20 mm is abraded 1000 times at a temperature of 23°C, the weight loss (abrasion loss) from the weight of the test piece is preferably 12 mg or less, and more preferably 11 mg or less. When the abrasion loss is 12 mg or less, the abrasion resistance is easily exhibited.

Further, a tensile stress retention rate of the polyurethane-based resin before and after seven days have passed under conditions of 70°C and RH 95% is preferably 80% or more, more preferably 90% or more, and still more preferably 100%. When the tensile stress retention rate is 80% or more, the hydrolysis resistance of the polyurethane resin composition is easily exhibited.

The polyurethane-based resin is excellent in mechanical properties, hydrolysis resistance, and low-temperature flexibility, and therefore can be used in many fields such as electrical and electronic components, precision equipment, household electric appliances, AV equipment, OA equipment, automobiles, agriculture, forestry and fishery, food, textiles, clothing, leather, and medical care.

Each aspect disclosed in the present description can be combined with any other feature disclosed in the present description. In addition, respective configurations, a combination thereof, and the like in each embodiment are illustrative, and various additions, omissions, and other changes of the configurations may be made, as appropriate, without departing from the spirit of the present disclosure. The present disclosure is not limited by the embodiments and is limited only by the claims.

Examples

An embodiment of the present disclosure will be described in more detail below based on Examples.

Example 1, Comparative Example 1

(Preparation of Diol Compound)

Into a flask, PO3G (polytrimethylene ether glycol) and CLM are added, and the molar ratio thus becomes the following ratio.

$$PO3G:CLM = 1:(2000 - (56100/\text{hydroxyl value of PO3G} \times 2))/114.14$$

After carrying out dehydration operation under reduced pressure, a catalyst was added, and the reaction was carried out at 160°C to form a diol compound of Example 1. The diol compound of Example 1 was an A-B-A block copolymer having a polycaprolactone as an A block component and PO3G as a B block component. Note that the content of the A block component was 50 mass% with respect to the total amount of the diol compound. In addition, a diol compound of Comparative Example 1 was obtained by performing the synthesis in the same manner as that of Example 1, except that PO3G was replaced with polytetramethylene ether glycol (PTMG).

(Preparation of Prepolymer)

The diol compound and an aromatic diisocyanate compound were added to a flask according to a k value (molar ratio of isocyanate/polyol) shown in Table 1, mixed, and reacted at 80°C until the residual amount of an isocyanate group was 9NCO%, and thus prepolymers of Example 1 and Comparative Example 1 were obtained. In Table 1, " - " indicates that the described compound was not added, or that the measurement was not performed or could not be performed.

(Preparation of Test Piece of Polyurethane-based Resin)

The prepolymer and the chain extender were charged into a cup container so that the molar ratio of the isocyanate group to the hydroxyl group was 1.03, and the mixture was mixed and defoamed using a vacuum defoaming stirrer (product name "Planetary centrifugal mixer Awatori Rentaro vacuum type ARV-310", manufactured by Thinky Corporation) to prepare a polyurethane resin composition. Thereafter, the mixture was poured into a mold with a thickness of 2 mm, a length of 12 mm, and a width of 20 mm, and cured by heating the mixture in an oven at 120°C for 16 hours. The mixture was then cured for 48 hours under a constant-temperature and high-humidity environment of 23°C and 50% Rh, and thus a test piece of the polyurethane-based resin was prepared.

Comparative Example 2 to 4

(Preparation of Prepolymer)

Prepolymers of Comparative Examples 2 to 4 were obtained in the same manner as that in Example 1, except that the respective diol compounds shown in Table 1 were used as the diol compounds.

(Preparation of Polyurethane Resin Test Piece)

Polyurethane resin compositions and test pieces of polyurethane-based resins were prepared in the same manner as that in Example 1, except that the prepolymers of Comparative Examples 2 to 4 were used.
Details of the respective components in Table 1 are described below.

- PO3G1000: Polytrimethylene ether glycol, manufactured by SK Chemicals Co., Ltd., number-average molecular weight of 1000
- PO3G2000: Polytrimethylene ether glycol, manufactured by SK Chemicals Co., Ltd., number-average molecular weight of 2000
- PTMG1000: Polytetramethylene ether glycol, manufactured by Mitsubishi Chemical Corporation, number-average molecular weight of 1000
- PTMG2000: Polytetramethylene ether glycol, manufactured by Mitsubishi Chemical Corporation, number-average molecular weight of 2000
- PCL2000: Polycaprolactone diol, manufactured by Daicel Corporation, number-average molecular weight of 2000
- MDI: 4,4'-Diphenylmethane diisocyanate, product name "Millionate MT", manufactured by Tosoh Corporation
- BDO: 1,4-butanediol, manufactured by Mitsubishi Chemical Corporation

[Evaluation]

The diol compounds and the test pieces of the polyurethane-based resins obtained in Examples and Comparative Examples were evaluated as follows, and the results are shown in Table 1.

(1) Hydroxyl Value

The hydroxyl values of the diol compounds of Examples and Comparative Examples were measured in accordance with JIS K 1557.

(2) Viscosity

The viscosity at 60°C of the diol compounds of Examples and Comparative Examples was measured in accordance with JIS K 1557.

(3) Molecular Weight Distribution

Each of the diol compounds of Examples and Comparative Examples was dissolved in THF, and the molecular weight distribution in the THF solution was measured using GPC (product name "HLC-8420GPC", manufactured by Tosoh Corporation).

(4) Hardness

The Type-D hardness at 23°C of the test pieces of the polyurethane-based resins prepared in Examples and the Comparative Examples was measured in accordance with JIS K 7312.

(5) Cold Hardening

Using a viscoelasticity measuring device (product name "DMA 7100", manufactured by Hitachi High-Tech Science Corporation) to the test pieces of the polyurethane-based resins prepared in Examples and the Comparative Examples, E' at each temperature was measured under conditions of a distance between chucks of 20 mm, a temperature of from -100 to 200°C, a heating rate of 2°C/min, a frequency of 10 Hz, an initial strain, a dynamic strain of 0.05, and a tensile mode state, and a DMA chart was prepared.
In the DMA chart obtained by the measurement of the storage modulus described above, the test piece in which a shoulder peak was observed in the range from -60°C to 40°C was evaluated as "with cold hardening", and the test piece in which no shoulder peak was observed was evaluated as "without cold hardening".

(6) Tensile Stress

Using the test pieces of the polyurethane-based resins prepared in Examples and Comparative Examples and using a No. 3 dumbbell in accordance with JIS K 7312, the tensile stress at 100% elongation, 300% elongation, and 500% elongation was measured at a temperature of 23°C, respectively. In numerical values in parentheses in Table 1, a degree of elongation at rupture when one of the polyurethane test pieces ruptures is indicated, and when the polyurethane test piece does not rupture within the above range, a value of the tensile stress at 500% elongation is evaluated.

(7) Abrasion Resistance

A Taber abrasion test was performed in accordance with JIS K 7312 using the test pieces of the polyurethane-based resins prepared in Examples and Comparative Examples, and each of the abrasion losses (mg) was measured 1000 times at a temperature of 23°C.

(8) Tensile Stress Retention Rate

The test pieces of the polyurethane-based resins prepared in Examples and Comparative Examples were used and allowed to stand for seven days under conditions of 70°C and 95% RH using an environmental test chamber (product name "Bench Top Type Temperature (& Humidity) Chamber SH-641", manufactured by ESPEC Corp.). The tensile stress retention rates before and after the test were evaluated as follows. Note that when the calculated value of the tensile stress retention rate was 100% or more, the result was evaluated as 100%.
Tensile stress retention rate (%) = (tensile stress before test - tensile stress after test)/(tensile stress before test) $\times$ 100

[Table 1]

Table 1

| | | | Example 1 | Comparative Example 1 | Comparative Example 2 | Comparative Example 3 | Comparative Example 4 |
|---|---|---|---|---|---|---|---|
| Molecular weight of diol compound | | | 2000 | 2000 | 2000 | 2000 | 2000 |
| Diol compound | (A-B-A) | A block component | PCL | PCL | - | - | - |
| | | B block component | PO3G1000 | PTMG1000 | | | |
| | Additional component | | - | - | PO3G2000 | PTMG2000 | PCL2000 |
| Hydroxyl Value [KOH mg/g] | | | 54.5 | 56.4 | 54.5 | 57.6 | - |
| Viscosity at 60°C [mPa·s] | | | 275 | 332 | 339 | 527 | - |
| Molecular weight distribution (Mw/Mn) | | | 1.4 | 1.4 | 2.3 | 2.3 | 1.4 |
| Aromatic diisocyanate | | | MDI | MDI | MDI | MDI | MDI |
| Chain extender | | | BDO | BDO | BDO | BDO | BDO |
| k value | | | 4.25 | 4.25 | 4.25 | 4.25 | 4.25 |
| Hardness | Type-D hardness | | 42 | 45 | 43 | 45 | 44 |
| Cold hardening | | | Without | Without | Without | With | Without |
| Tensile stress | Stress at 100% Elongation | | 8.3 | 9.8 | 8.9 | 10.6 | 10.6 |
| | Stress at 300% elongation | | 17 | 18 | 14 | 19 | 19 |
| | Stress at from 400 to 500% elongation | | 44 (465%) | 34 | 23 | 36 (470%) | 38 (467%) |
| Abrasion loss [mg] | | | 11 | 13 | 29 | 14 | 11 |
| Tensile stress retention rate (%) | | | 100 | - | 100 | - | 61 |

It was confirmed that the polyurethane-based resin formed from the polyurethane resin composition used in Example 1 was excellent in mechanical properties such as tensile stress and abrasion resistance, low-temperature flexibility, and hydrolysis resistance. On the other hand, it was confirmed that when the diol compound does not contain the polylactone chain, there is a problem in mechanical properties such as tensile stress and abrasion resistance, and low-temperature flexibility (Comparative Examples 2 and 3). In addition, it was confirmed that when a polyether polyol chain other than polytrimethylene ether glycol was used as the B block component in the A-B-A block copolymer, mechanical properties such as tensile stress and abrasion resistance were not sufficient (Comparative Example 1), and when only the polylactone chain was used, hydrolysis resistance was poor (Comparative Example 4).

Hereinafter, variations of the present disclosure will be described.

[Appendix 1]

A polyurethane resin composition, comprising:

a urethane prepolymer having a diol compound as a constitutional unit and an aromatic diisocyanate as a constitutional unit; and
a chain extender, wherein
the diol compound comprises an A-B-A block copolymer, the A-B-A block copolymer comprises a polylactone chain as an A block component and a polytrimethylene ether glycol chain as a B block component; and
a content of the A block component relative to a total amount of the A-B-A block copolymer is from 33 to 67 mass%.

[Appendix 2]

The polyurethane resin composition according to appendix 1, wherein the A-B-A block copolymer has a number-average molecular weight of 4000 or less.

[Appendix 3]

The polyurethane resin composition according to appendix 1 or 2, wherein the polylactone chain is polycaprolactone.

[Appendix 4]

The polyurethane resin composition according to any one of appendices 1 to 3, wherein the aromatic diisocyanate is diphenylmethane diisocyanate.

[Appendix 5]

The polyurethane resin composition according to any one of appendices 1 to 4, wherein the chain extender is 1,4-butanediol.

[Appendix 6]

A polyurethane-based resin, wherein the urethane prepolymer in the polyurethane resin composition described in any one of appendices 1 to 5 is cross-linked with the chain extender.

**Claims**

1. A polyurethane resin composition, comprising:

   a urethane prepolymer having a diol compound as a constitutional unit and an aromatic diisocyanate as a constitutional unit; and
   a chain extender, wherein
   the diol compound includes an A-B-A block copolymer, the A-B-A block copolymer includes a polylactone chain as an A block component and a polytrimethylene ether glycol chain as a B block component; and
   a content of the A block component relative to a total amount of the A-B-A block copolymer is from 33 to 67 mass%.

2. The polyurethane resin composition according to claim 1, wherein the A-B-A block copolymer has a number-average molecular weight of 4000 or less.

3. The polyurethane resin composition according to claim 1 or 2, wherein the polylactone chain is polycaprolactone.

4. The polyurethane resin composition according to claim 1 or 2, wherein the aromatic diisocyanate is diphenylmethane diisocyanate.

5. The polyurethane resin composition according to claim 1 or 2, wherein the chain extender is 1,4-butanediol.

6. A polyurethane-based resin, wherein the urethane prepolymer in the polyurethane resin composition described in claim 1 or 2 is cross-linked with the chain extender.

## INTERNATIONAL SEARCH REPORT

| International application No. |
| --- |
| **PCT/JP2024/011876** |

**A. CLASSIFICATION OF SUBJECT MATTER**

*C08G 18/66*(2006.01)i; *C08G 18/10*(2006.01)i; *C08G 18/32*(2006.01)i; *C08G 18/42*(2006.01)i; *C08G 18/48*(2006.01)i; *C08G 18/76*(2006.01)i

FI:  C08G18/66 007; C08G18/10; C08G18/32 006; C08G18/42 044; C08G18/42 069; C08G18/48; C08G18/76

According to International Patent Classification (IPC) or to both national classification and IPC

**B. FIELDS SEARCHED**

Minimum documentation searched (classification system followed by classification symbols)

C08G2/00-85/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| A | US 2011/0052920 A1 (E.I. DU PONT DE NEMOURS AND COMPANY) 03 March 2011 (2011-03-03) | 1-6 |
| A | US 2012/0053291 A1 (E.I. DU PONT DE NEMOURS AND COMPANY) 01 March 2012 (2012-03-01) | 1-6 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **12 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/011876**

| Patent document cited in search report | Publication date (day/month/year) | Patent family member(s) | Publication date (day/month/year) |
|---|---|---|---|
| US 2011/0052920 A1 | 03 March 2011 | WO 2009/155409 A1 | |
| US 2012/0053291 A1 | 01 March 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023054228 A

- JP 2005535733 A

**Non-patent literature cited in the description**

- **MITSUO AKIBA**. *Journal of The Adhesion Society of Japan*, 2004, vol. 40 (6), 241-252